(19) **Europäisches Patentamt / European Patent Office / Office européen des brevets**

(11) **EP 4 769 627 A1**

(12) **EUROPEAN PATENT APPLICATION**
published in accordance with Art. 153(4) EPC

(43) Date of publication:
**01.07.2026 Bulletin 2026/27**

(21) Application number: **24908114.2**

(22) Date of filing: **19.12.2024**

(51) International Patent Classification (IPC):
**H01M 10/0569** (2010.01)　　**H01M 10/052** (2010.01)

(52) Cooperative Patent Classification (CPC):
**H01M 10/052; H01M 10/0569; Y02E 60/10;
Y02P 70/50**

(86) International application number:
**PCT/KR2024/020708**

(87) International publication number:
**WO 2025/135831 (26.06.2025 Gazette 2025/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.12.2023 KR 20230188184**

(71) Applicant: **LG Energy Solution, Ltd.
Seoul 07335 (KR)**

(72) Inventors:
 • **LEE, Jung Min
  Daejeon 34122 (KR)**
 • **LEE, Chul Haeng
  Daejeon 34122 (KR)**

 • **BAEK, Ga Young
  Daejeon 34122 (KR)**
 • **JI, Su Hyeon
  Daejeon 34122 (KR)**
 • **YEOM, Chul Eun
  Daejeon 34122 (KR)**
 • **CHO, Yoon Gyo
  Daejeon 34122 (KR)**
 • **KO, Jin Hyuck
  Daejeon 34122 (KR)**
 • **HEO, Eun Seon
  Daejeon 34122 (KR)**

(74) Representative: **Hoffmann Eitle
Patent- und Rechtsanwälte PartmbB
Arabellastraße 30
81925 München (DE)**

(54) **METHOD FOR MANUFACTURING LITHIUM SECONDARY BATTERY**

(57)　The present invention relates to a method for manufacturing a lithium secondary battery, the method comprising: a step of preparing an electrode assembly comprising a positive electrode, a negative electrode, and a separator; a step of accommodating the electrode assembly in a battery case; a step of injecting a first non-aqueous electrolyte into the battery case to manufacture a pre-lithium secondary battery; a step of activating the pre-lithium secondary battery; and a step of injecting a second non-aqueous electrolyte into the activated pre-lithium secondary battery, wherein the first non-aqueous electrolyte comprises a first organic solvent comprising a linear carbonate-based solvent, and the second non-aqueous electrolyte comprises a second organic solvent comprising an ester-based solvent.

EP 4 769 627 A1

## Description

### TECHNICAL FIELD

The present invention relates to a method for manufacturing a lithium secondary battery.

### BACKGROUND ART

Recently, as the application areas of lithium secondary batteries have rapidly expanded to not only power supply for electronic devices such as electric, electronic, communication, and computers, but also power storage for large-area devices such as automobiles and power storage devices, the demand for high-capacity, high-output, and high-stability secondary batteries is increasing.

The lithium secondary battery is generally composed of a positive electrode containing a positive electrode active material, a negative electrode containing a negative electrode active material, an electrolyte that serves as a medium for transferring lithium ions, and a separator. In this case, carbon-based active materials, silicon-based active materials, or the like may be used as the negative electrode active material. In addition, lithium transition metal oxides such as lithium cobalt oxide ($LiCoO_2$), lithium nickel oxide ($LiNiO_2$), and lithium nickel-cobalt-manganese composite transition metal oxide may be used as the positive electrode active material.

The lithium secondary battery is manufactured by forming an electrode assembly by interposing a separator between a positive electrode and a negative electrode, inserting or accommodating the electrode assembly in a battery case, injecting a non-aqueous electrolyte that serves as a medium for transferring lithium ions, and then sealing. In this case, in order to secure the performance of the battery, an activation process (formation) may be performed on the manufactured lithium secondary battery.

The activation process is a step of activating the lithium secondary battery through electrochemical charging after battery assembly, and during the electrochemical charging, lithium ions from the positive electrode move to and are inserted into the negative electrode. In this case, highly reactive lithium ions react with the electrolyte to produce compounds such as $Li_2CO_3$, $Li_2O$, LiOH, and LiF, and the compounds form a solid electrolyte interface (SEI) layer on the surface of the electrode. Since the SEI layer closely affects the lifespan and capacity maintenance, the formation of the SEI layer is an important factor.

### DISCLOSURE OF THE INVENTION

### TECHNICAL PROBLEM

An object of the present invention is to provide a method for manufacturing a lithium secondary battery having excellent long-term life performance and resistance reduction effect by improving the high-temperature durability of the battery while significantly reducing gas generation.

TECHNICAL SOLUTION

[1] The present invention provides a method for manufacturing a lithium secondary battery, the method comprising: a step of preparing an electrode assembly comprising a positive electrode, a negative electrode, and a separator; a step of accommodating the electrode assembly in a battery case; a step of injecting a first non-aqueous electrolyte into the battery case to manufacture a pre-lithium secondary battery; a step of activating the pre-lithium secondary battery; and a step of injecting a second non-aqueous electrolyte into the activated pre-lithium secondary battery, wherein the first non-aqueous electrolyte comprises a first organic solvent comprising a linear carbonate-based solvent, and the second non-aqueous electrolyte comprises a second organic solvent comprising an ester-based solvent.

[2] The present invention provides the method for manufacturing a lithium secondary battery according to [1], wherein the linear carbonate-based solvent comprises at least one selected from the group consisting of dimethyl carbonate, diethyl carbonate and ethyl methyl carbonate.

[3] The present invention provides the method for manufacturing a lithium secondary battery according to one or more among [1] to [2], wherein the first organic solvent further comprises a cyclic carbonate-based solvent.

[4] The present invention provides the method for manufacturing a lithium secondary battery according to one or more among [1] to [3], wherein the cyclic carbonate-based solvent comprises at least one of ethylene carbonate and fluoroethylene carbonate.

[5] The present invention provides the method for manufacturing a lithium secondary battery according to one or more among [1] to [4], wherein the first organic solvent comprises the linear carbonate-based solvent and the cyclic carbonate-based solvent in a volume ratio of 60:40 to 95:5.

[6] The present invention provides the method for manufacturing a lithium secondary battery according to one or more among [1] to [5], wherein the first organic solvent does not comprise an ester-based solvent.

[7] The present invention provides the method for manufacturing a lithium secondary battery according to one or more among [1] to [6], wherein the ester-based solvent comprises at least one selected from the group consisting of ethyl propionate, propyl propionate and 2,2-difluoroethyl acetate.

[8] The present invention provides the method for manufacturing a lithium secondary battery according to one or more among [1] to [7], wherein the second organic solvent further comprises at least one cyclic carbonate-based solvent selected from ethylene carbonate and fluoroethylene carbonate.

[9] The present invention provides the method for manufacturing a lithium secondary battery according to one or more among [1] to [8], wherein the second organic solvent comprises the ester-based solvent and the cyclic carbonate-based solvent in a volume ratio of 60:40 to 95:5.

[10] The present invention provides the method for manufacturing a lithium secondary battery according to one or more among [1] to [9], wherein the volume ratio of the injection amount of the first non-aqueous electrolyte and the injection amount of the second non-aqueous electrolyte is 50:50 to 99:1.

[11] The present invention provides the method for manufacturing a lithium secondary battery according to one or more among [1] to [10], wherein at least one of the first non-aqueous electrolyte and the second non-aqueous electrolyte further comprises a lithium salt.

[12] The present invention provides the method for manufacturing a lithium secondary battery according to one or more among [1] to [11], wherein the step of activating the pre-lithium secondary battery comprises an electrochemical charging process of the pre-lithium secondary battery.

## ADVANTAGEOUS EFFECTS

The lithium secondary battery of the present invention comprises an injection process of two types of non-aqueous electrolytes, wherein the first non-aqueous electrolyte injected before activation comprises a linear carbonate-based solvent, and the second non-aqueous electrolyte injected after activation comprises an ester-based solvent. The first non-aqueous electrolyte comprises a carbonate-based solvent, and may form a durable and stable SEI layer on the electrode during activation. The second non-aqueous electrolyte has less concern about gas generation due to electrolyte side reactions during battery operation. Due to the characteristics and injection timing of the first non-aqueous electrolyte and the second non-aqueous electrolyte, the lithium secondary battery manufactured from the present invention may have excellent long-term life performance and resistance reduction effect.

## MODE FOR CARRYING OUT THE INVENTION

Words or terms used in the present specification and claims shall not be interpreted as the meaning defined in commonly used dictionaries. The concept of terms should be interpreted as having a meaning that is consistent with the technical idea of the invention, based on the principle that an inventor may properly define the meaning of the words or terms to best explain the invention.

In the present specification, the terms "comprise," "include," or "have" are intended to specify the presence of a feature, number, step, component, or combination thereof, but should be understood not to preclude the possibility of the presence or addition of one or more other features, numbers, steps, components, or combinations thereof.

Hereinafter, the present invention will be described in more detail.

### Method for Manufacturing Lithium Secondary Battery

The present invention relates to a method for manufacturing a lithium secondary battery.

The method for manufacturing a lithium secondary battery according to the present invention comprises: a step of preparing an electrode assembly comprising a positive electrode, a negative electrode, and a separator; a step of accommodating the electrode assembly in a battery case; a step of injecting a first non-aqueous electrolyte into the battery case to manufacture a pre-lithium secondary battery; a step of activating the pre-lithium secondary battery; and a step of injecting a second non-aqueous electrolyte into the activated pre-lithium secondary battery, wherein the first non-aqueous electrolyte comprises a first organic solvent including a linear carbonate-based solvent, and the second non-aqueous electrolyte comprises a second organic solvent including an ester-based solvent.

The lithium secondary battery of the present invention includes injection processes of two types of non-aqueous electrolytes, wherein the first non-aqueous electrolyte injected before activation comprises a linear carbonate-based solvent, and the second non-aqueous electrolyte injected after activation comprises an ester-based solvent. The first non-aqueous electrolyte may form a durable and stable SEI layer on the electrode during activation, by including a carbonate-based solvent. The second non-aqueous electrolyte has less concern about gas generation due to electrolyte side reactions during battery operation. Due to the characteristics and injection timing of the first non-aqueous electrolyte and the second non-aqueous electrolyte, the lithium secondary battery manufactured from the present invention may have excellent long-term life performance and resistance reduction effect.

**(1) Preparation of Electrode Assembly**

First, an electrode assembly including a positive electrode, a negative electrode, and a separator is prepared. Specifically, the electrode assembly may be manufactured by interposing a separator between a positive electrode and a negative electrode facing the positive electrode. More specifically, the electrode assembly may be manufactured by sequentially laminating one or more, specifically two or more, basic units of a positive electrode, a separator, and a negative electrode, laminated in order.

The positive electrode may include a positive electrode active material.

The positive electrode active material is a compound capable of reversible intercalation and deintercalation, and is not particularly limited as long as it is a positive electrode active material used in the relevant field. Specifically, the positive electrode active material is a layered compound such as lithium cobalt oxide ($LiCoO_2$) and lithium nickel oxide ($LiNiO_2$), or a compound substituted with one or more transition metals; lithium iron oxides such as $LiFe_3O_4$; lithium iron phosphates such as $LiFePO_4$; lithium manganese oxides having a chemical formula of $Li_{1+c1}Mn_{2-c1}O_4$ ($0 \leq c1 \leq 0.33$), $LiMnO_3$, $LiMn_2O_3$ and $LiMnO_2$; lithium copper oxide ($Li_2CuO_2$); vanadium oxides such as $LiV_3O_8$, $V_2O_5$ and $Cu_2V_2O_7$; Ni-site type lithium nickel oxides represented by a chemical formula $LiNi_{1-c2}M_{c2}O_2$ (where M is at least one selected from the group consisting of Co, Mn, Al, Cu, Fe, Mg, B, and Ga, and $0.01 \leq c2 \leq 0.3$ is satisfied); or lithium manganese composite oxides represented by a chemical formula $LiMn_{2-c3}M_{c3}O_2$ (where M is at least one selected from the group consisting of Co, Ni, Fe, Cr, Zn, and Ta, and $0.01 \leq c3 \leq 0.1$ is satisfied) or $Li_2Mn_3MO_8$ (where M is at least one selected from the group consisting of Fe, Co, Ni, Cu, and Zn), but the present invention is not limited thereto. The positive electrode may be a Li-metal positive electrode.

More specifically, the positive electrode active material may include at least one selected from the group consisting of lithium cobalt oxide ($LiCoO_2$), high nickel-containing lithium nickel cobalt manganese oxide, lithium-rich manganese-rich oxide, and lithium iron phosphate.

The high nickel-containing lithium nickel cobalt manganese oxide may be represented by Formula A below.

$$[\text{Formula A}] \qquad Li_{1+x}(Ni_aCo_bMn_cM_d)O_2$$

In Formula A, M is one or more selected from W, Cu, Fe, V, Cr, Ti, Zr, Zn, Al, In, Ta, Y, La, Sr, Ga, Sc, Gd, Sm, Ca, Ce, Nb, Mg, B, and Mo, and 1+x, a, b, c, and d are atomic fractions of independent elements, respectively, $0 \leq x \leq 0.2$, $0.50 \leq a < 1$, $0 < b \leq 0.25$, $0 < c \leq 0.25$, $0 \leq d \leq 0.1$, and $a+b+c+d=1$. Preferably, a, b, c and d may satisfy $0.70 \leq a \leq 0.95$, $0.025 \leq b \leq 0.20$, $0.025 \leq c \leq 0.20$, $0 \leq d \leq 0.05$, respectively. In addition, a, b, c and d may satisfy $0.80 \leq a \leq 0.95$, $0.025 \leq b \leq 0.15$, $0.025 \leq c \leq 0.15$, $0 \leq d \leq 0.05$, respectively. In addition, a, b, c and d may satisfy $0.85 \leq a \leq 0.90$, $0.05 \leq b \leq 0.10$, $0.05 \leq c \leq 0.10$, $0 \leq d \leq 0.03$, respectively.

The lithium-rich manganese-rich oxide may include a compound represented by Formula B below.

$$[\text{Formula B}] \qquad Li_{1+s}[Ni_tCo_uMn_vM^1_w]O_{2+z}$$

In Formula B, $M^1$ is at least one selected from W, Cu, Fe, V, Cr, Ti, Zr, Zn, Al, In, Ta, Y, La, Sr, Ga, Sc, Gd, Sm, Ca, Ce, Nb, Mg, B and Mo, and $0.05 \leq s \leq 1$, $0 \leq t \leq 0.5$, $0 \leq u \leq 0.3$, $0.5 \leq v < 1.0$, $0 \leq w \leq 0.2$, and $0 \leq z \leq 1$. Preferably, in Formula B, $0.05 \leq s \leq 1.0$, $0.1 \leq t \leq 0.5$, $0 \leq u \leq 0.1$, $0.5 \leq v < 1.0$, $0 \leq w \leq 0.2$, and $0 \leq z \leq 1$. More preferably, in Formula B, $0.10 \leq s \leq 0.50$, $0.1 \leq t \leq 0.5$, $0 \leq u \leq 0.1$, $0.6 \leq v < 1.0$, $0 \leq w \leq 0.1$, and $0 \leq z \leq 0.50$ may be satisfied.

The lithium iron phosphate may include a compound represented by Formula C below.

$$[\text{Formula C}] \qquad Li_{1+e}Fe_{1-g}M^2_g(PO_{4-f})X_f$$

In Formula C, $M^2$ is one or more elements selected from Co, Ni, Mn, Al, Mg, Ti, and V, X is F, S, or N, and $0 \leq g \leq 0.5$; $-0.5 \leq e \leq +0.5$; $0 \leq f \leq 0.1$. Formula C may be specifically represented by $LiFePO_4$ (g=0, e=0, and f=0).

The positive electrode may include a positive electrode current collector and a positive electrode active material layer disposed on at least one surface of the positive electrode current collector.

The positive electrode current collector is not particularly limited as long as it has high conductivity without causing a chemical change in the battery. Specifically, the positive electrode current collector may include at least one selected from the group consisting of copper, stainless steel, aluminum, nickel, titanium, calcined carbon, and aluminum-cadmium alloy, preferably aluminum.

The thickness of the positive electrode current collector may typically have 3 to 500 $\mu$m.

The positive electrode current collector may also form fine unevenness on the surface to strengthen the bonding strength of the positive electrode active material. For example, the positive electrode current collector may be used in various forms such as a film, a sheet, a foil, a net, a porous body, a foam and a non-woven fabric.

The positive electrode active material layer may be disposed on at least one side of the positive electrode current collector. Specifically, the positive electrode active material layer may be disposed on one side or both sides of the positive electrode current collector.

The positive electrode active material layer may include the positive electrode active material.

The positive electrode active material layer may selectively further include a binder and/or a conductive material together with the above-described positive electrode active material.

The binder is a component that assists in the binding of the active material and the conductive material, and the binding to the current collector, and specifically, may include at least one selected from the group consisting of polyvinylidene fluoride, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene terpolymer (EPDM), sulfonated EPDM, styrene-butadiene rubber, and fluororubber, preferably polyvinylidene fluoride.

The binder may be included in the positive electrode active material layer at 1 wt% to 20 wt%, preferably 1.2 wt% to 10 wt%, in terms of sufficiently securing binding force between components in such as the positive electrode active material.

The conductive material may be used to assist and improve conductivity in the secondary battery, and is not particularly limited as long as it has conductivity without causing chemical change. Specifically, the positive electrode conductive material may include at least one selected from the group consisting of graphite such as natural graphite or artificial graphite; carbon blacks such as carbon black, acetylene black, Ketjen black, channel black, furnace black, lamp black, and thermal black; conductive fibers such as carbon fibers or metal fibers; conductive tubes such as carbon nanotubes; fluorocarbon; metal powder such as aluminum or nickel powder; conductive whiskers of zinc oxide or potassium titanate; conductive metal oxides such as titanium oxide; and polyphenylene derivatives, and preferably may include carbon nanotubes in terms of improving conductivity.

The conductive material may be included in the positive electrode active material layer at 1 wt% to 20 wt%, preferably 1.2 wt% to 10 wt%, in terms of sufficiently securing electrical conductivity.

The thickness of the positive electrode active material layer may be 5 $\mu$m to 500 $\mu$m, preferably 20 $\mu$m to 200 $\mu$m.

The positive electrode may be manufactured by applying a positive electrode slurry containing a positive electrode active material and selectively a binder, a conductive material and a solvent for forming a positive electrode slurry, on the positive electrode current collector, and then drying and rolling.

The negative electrode may be opposite to the positive electrode.

The negative electrode may include a negative electrode active material.

The negative electrode active material is a material capable of reversibly intercalate/deintercalate lithium ions, and may include at least one selected from the group consisting of carbon-based active materials, (semi)metal-based active materials, and a lithium metal, and specifically may include at least one selected from carbon-based active materials and (semi)metal-based active materials.

The carbon-based active material may include at least one selected from the group consisting of artificial graphite, natural graphite, hard carbon, soft carbon, carbon black, graphene, and fibrous carbon, and preferably may include at least one selected from the group consisting of artificial graphite and natural graphite.

The average particle diameter ($D_{30}$) of the carbon-based active material may be 10 $\mu$m to 30 $\mu$m, preferably 15 $\mu$m to 25 $\mu$m, in order to ensure structural stability during charge/discharge and reduce side reactions with an electrolyte.

Specifically, the (semi) metal-based active material may include at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an oxide of at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; lithium titanium oxide (LTO); lithium vanadium oxide and the like.

More specifically, the (semi)metal-based active material may include a silicon-based active material.

The silicon-based active material may include a compound represented by $SiO_x (0 \leq x < 2)$. In the case of $SiO_2$, since $SiO_2$ does not react with lithium ions and thus may not store lithium, x may preferably be within the range, and more preferably, the silicon-based active material may be SiO.

The average particle diameter ($D_{50}$) of the silicon-based active material may be 1 $\mu$m to 30 $\mu$m, preferably 2 $\mu$m to 15 $\mu$m, in terms of reducing side reactions with an electrolyte while ensuring structural stability during charge and discharge.

The negative electrode may include a negative electrode current collector, and a negative electrode active material layer disposed on at least one surface of the negative electrode current collector. In this case, the negative electrode active material may be included in the negative electrode active material layer.

The negative electrode current collector is not particularly limited as long as it has high conductivity without causing chemical changes in the battery. Specifically, the negative electrode current collector may use copper, stainless steel, aluminum, nickel, titanium, calcined carbon, copper or stainless steel, surface-treated with carbon, nickel, titanium, silver or the like, an aluminum-cadmium alloy or the like.

The negative electrode current collector may typically have a thickness of 3 to 500 $\mu$m.

The negative electrode current collector may also form fine unevenness on the surface to strengthen the bonding strength of the negative electrode active material. For example, the negative electrode current collector may be used in various forms such as a film, a sheet, a foil, a net, a porous body, a foam and a non-woven fabric.

The negative electrode active material layer may be disposed on at least one side of the negative electrode current collector, specifically, one side or both sides of the negative electrode current collector.

The negative electrode active material may be included in the negative electrode active material layer at 60 wt% to 99 wt%, preferably 75 wt% to 95 wt%.

Other explanation on the positive electrode active materials has been described above and is omitted.

The negative electrode active material layer may further include a binder and/or a conductive material together with the negative electrode active material.

The binder is used to improve the performance of the battery by improving the adhesion between the negative electrode active material layer and the negative electrode current collector, and may include, for example, at least one selected from the group consisting of polyvinylidene fluoride-hexafluoropropylene copolymer (PVDF-co-HFP), polyvinylidene fluoride (PVDF), polyacrylonitrile, polymethyl methacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylic acid, ethylene-propylene-diene monomer (EPDM), sulfonated EPDM, styrene butadiene rubber (SBR), fluororubber, and materials in which hydrogens of them are substituted with Li, Na, Ca or the like, and also may include various copolymers thereof.

The binder may be included in the negative electrode active material layer at 0.5 wt% to 10 wt%, preferably 1 wt% to 5 wt%.

The conductive material is not particularly limited as long as it does not cause a chemical change in the battery and has conductivity, and for example, graphite such as natural graphite or artificial graphite; carbon blacks such as carbon black, acetylene black, Ketjen black, channel black, furnace black, lamp black and thermal black; conductive fibers such as carbon fibers and metal fibers; conductive tubes such as carbon nanotubes; fluorocarbon; metal powder such as aluminum or nickel powder; conductive whiskers of zinc oxide or potassium titanate; conductive metal oxides such as titanium oxide; conductive materials such as polyphenylene derivatives, or the like may be used.

The conductive material may be included in the negative electrode active material layer at 0.5 wt% to 10 wt%, preferably 1 wt% to 5 wt%.

The thickness of the negative electrode active material layer may be 10 $\mu$m to 200 $\mu$m, preferably 20 $\mu$m to 150 $\mu$m.

The negative electrode may be manufactured by applying a negative electrode slurry containing a negative electrode active material, a binder, a conductive material, and/or a solvent for forming a negative electrode slurry on at least one surface of a negative electrode current collector, and then drying and rolling.

The solvent for forming the negative electrode slurry may include at least one selected from the group consisting of distilled water, N-methyl-2-pyrrolidone (NMP), ethanol, methanol, and isopropyl alcohol, preferably distilled water, in terms of facilitating dispersion of the negative electrode active material, binder, and/or conductive material. The solid content of the negative electrode slurry may be 30 wt% to 80 wt%, specifically 40 wt% to 70 wt%.

The separator may be interposed between the positive electrode and the negative electrode.

In addition, as a separator, a general porous polymer film conventionally used as a separator, for example, a porous polymer film formed of a polyolefin-based polymer such as an ethylene homopolymer, a propylene homopolymer, an ethylene/butene copolymer, an ethylene/hexene copolymer and an ethylene/methacrylate copolymer, may be used alone or in a laminated manner of them, or a general porous nonwoven fabric, for example, a nonwoven fabric formed of high-melting-point glass fiber, polyethylene terephthalate fiber or the like may be used, but is not limited thereto. In addition, a coated separator containing a ceramic component or a polymer material may be used to secure heat resistance or mechanical strength, and may selectively be used in a single-layer or multi-layer structure.

## (2) Accommodation of Electrode Assembly

Next, the electrode assembly is accommodated in a battery case. The battery case may play a role of protecting internal components of the lithium secondary battery, such as the electrode assembly, the first non-aqueous electrolyte and the second non-aqueous electrolyte, described later.

The battery case may be any battery case known in the art without limitation. Specifically, the battery case may be a can-type battery case or a pouch-type battery case depending on the exterior or application form of the electrode assembly. Specifically, the battery case may be a pouch-type battery case.

If the battery case is a pouch-type battery case, the pouch-type battery case may be manufactured by molding a pouch film laminate in which a substrate layer, a gas barrier layer and a sealant layer are laminated. The substrate layer may include polyethylene terephthalate (PET), nylon or the like. The gas barrier layer may include at least one selected from aluminum and stainless steel, specifically aluminum. The sealant layer may be composed of a polyolefin resin such as polypropylene (PP) and/or polyethylene (PE). By molding the pouch film laminate, a void space in which the electrode assembly may be accommodated may be formed, and the electrode assembly may be accommodated in the void space.

### (3) Injection of First Non-aqueous Electrolyte

Next, the first non-aqueous electrolyte is injected into the battery case.

The first non-aqueous electrolyte includes a first organic solvent. The first organic solvent includes a linear carbonate-based solvent.

The first organic solvent includes a linear carbonate-based solvent, and is partially decomposed in the activation process described later to contribute to the formation of an SEI layer on the electrode. The SEI layer formed from the decomposition of the linear carbonate-based solvent has excellent durability and stability, and has the merit of being advantageous in reducing resistance. If a solvent other than the linear carbonate-based solvent (for example, an ester-based solvent) is used, excessive decomposition may result in increased resistance and increased durability of the SEI film. In this regard, the first organic solvent may not include an ester-based solvent.

The linear carbonate-based solvent may specifically include at least one selected from the group consisting of dimethyl carbonate (DMC), diethyl carbonate (DEC), dipropyl carbonate, ethyl methyl carbonate (EMC), methyl propyl carbonate, and ethyl propyl carbonate, and more specifically may include at least one selected from the group consisting of dimethyl carbonate, diethyl carbonate, and ethyl methyl carbonate, and more specifically may include ethyl methyl carbonate.

The first organic solvent may further include a cyclic carbonate-based solvent together with the linear carbonate-based solvent. The cyclic carbonate-based solvent is a high-viscosity organic solvent that has a high dielectric constant and thus may easily dissociate a lithium salt in an electrolyte. Specifically, the cyclic carbonate-based solvent may include at least one selected from the group consisting of ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate, and more specifically, may include at least one selected from the group consisting of ethylene carbonate (EC) and fluoroethylene carbonate (FEC), and even more specifically, may include ethylene carbonate (EC).

If the first organic solvent includes the linear carbonate-based solvent and the cyclic carbonate-based solvent, the first organic solvent may include the linear carbonate-based solvent and the cyclic carbonate-based solvent in a volume ratio of 60:40 to 95:5, specifically, a volume ratio of 65:35 to 90:10, and more specifically, a volume ratio of 68:32 to 85:15. In this case, the first organic solvent is preferable in that it may simultaneously satisfy high dielectric constant and low viscosity characteristics and achieve excellent ion conductivity characteristics, thereby enabling the formation of a stable SEI layer during activation through the first organic solvent.

The first non-aqueous electrolyte may further include a lithium salt (which may be represented as a first lithium salt).

As the lithium salt, various lithium salts commonly used in non-aqueous electrolytes for lithium secondary batteries may be used without limitation. For example, the lithium salt may include $Li^+$ as a cation and may include as an anion, at least one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$ and $(CF_3CF_2SO_2)_2N^-$.

Specifically, the lithium salt may include at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, $LiB(C_2O_4)_2$ (LiBOB), $LiCF_3SO_3$, $LiN(SO_2F)_2$ (LiFSI), $LiCH_3SO_3$, $LiCF_3CO_2$, $LiCH_3CO_2$ and $LiN(SO_2CF_2CF_3)_2$ (LiBETI). Specifically, the lithium salt may include at least one selected from the group consisting of $LiBF_4$, $LiClO_4$, $LiPF_6$, $LiB(C_2O_4)_2$ (LiBOB), $LiCF_3SO_3$, $LiN(SO_2CF_3)_2$ (LiTFSI), $LiN(SO_2F)_2$ (LiFSI) and $LiN(SO_2CF_2CF_3)_2$ (LiBETI).

The first non-aqueous electrolyte may further include an additive (which may be represented as a first additive).

The additive may be included in the first non-aqueous electrolyte for the purpose of preventing the non-aqueous electrolyte from being decomposed in a high-power environment and causing negative electrode collapse, or for the purpose of low-temperature high-rate discharge characteristics, high-temperature stability, overcharge prevention, suppression effect of battery expansion at high temperatures, and reinforcement of the SEI layer.

Specifically, the additive may be at least one selected from the group consisting of vinylene carbonate, vinyl ethylene carbonate, fluoroethylene carbonate, propane sultone, propene sultone, 1,4-butane sultone, ethane sultone, succinonitrile, adiponitrile, ethylene sulfate, lithium difluoro phosphate (LiDFP), lithium tetrafluoroborate (LiBF4), lithium difluoro(oxalato)borate (LiODFB), lithium bis-(oxalato)borate (LiBOB), and tris(trimethylsilyl) **phosphite** (TMSPi). Specifically, the additive may include at least one selected from the group consisting of vinylene carbonate, propane sultone, and ethylene sulfate. More specifically, the additive may include vinylene carbonate, propane sultone, and ethylene sulfate.

The additive may be included in the first non-aqueous electrolyte at 0.1 wt% to 15 wt%.

The first non-aqueous electrolyte may be injected into the battery case to manufacture a pre-lithium secondary battery. The pre-lithium secondary battery means that an electrode assembly and a first non-aqueous electrolyte are accommodated in the battery case, and is defined to distinguish from a lithium secondary battery in which an activation process described later is performed and a second non-aqueous electrolyte is injected.

After the first non-aqueous electrolyte is injected into the battery case, the battery case may be sealed. After the sealing, an activation process described later may be performed.

## (4) Activation of Pre-lithium Secondary Battery

Next, the pre-lithium secondary battery is activated. According to the present invention, since activation is performed after the first non-aqueous electrolyte is injected into the battery case, a durable and stable SEI layer may be formed on the electrode, specifically, the negative electrode.

The step of activating the pre-lithium secondary battery may be applied to an activation process known in the art without limitation.

Specifically, the step of activating the pre-lithium secondary battery may include an electrochemical charging process of the pre-lithium secondary battery. Alternatively, the step of activating the pre-lithium secondary battery may include an electrochemical charging process of the pre-lithium secondary battery and an electrochemical discharging process of the pre-lithium secondary battery. Alternatively, the step of activating the pre-lithium secondary battery may include a process of performing the process of electrochemically charging and discharging the pre-lithium secondary battery for one or more cycles.

Specifically, the step of activating the pre-lithium secondary battery may be performed by electrochemically charging at room temperature ($20\pm5°C$) at a C-rate of 0.05 C to 2 C, specifically 0.1 C to 1 C, to an SOC 10% or more, specifically SOC 20% or more, and more specifically SOC 30% or more. Alternatively, the step of activating the pre-lithium secondary battery may be performed at a temperature of 45°C to 60°C under a pressure of 0.5 kgf/cm$^2$ to 20 kgf/cm$^2$ depending on the C-rate and SOC conditions.

## (5) Injection of Second Non-aqueous Electrolyte

Next, a second non-aqueous electrolyte is injected into the activated pre-lithium secondary battery.

The second non-aqueous electrolyte includes a second organic solvent. The second organic solvent includes an ester-based solvent. The ester-based solvent generates gas such as $CO_2$ less when the battery is operated (charged and discharged) than other solvents such as linear carbonates, so is very advantageous in terms of reducing resistance, improving long-term life performance, and improving safety. Meanwhile, if the ester-based solvent is injected before the initial activation process, there is a concern that an SEI layer with increased resistance may be formed due to a large degree of electrolyte side reactions. Therefore, injects the ester-based solvent is injected after activation in the present invention.

The ester-based solvent may include at least one selected from the group consisting of methyl acetate, ethyl acetate, propyl acetate, methyl propionate, ethyl propionate, propyl propionate, butyl propionate, and 2,2-difluoroethyl acetate, and specifically, may include at least one selected from the group consisting of ethyl propionate, propyl propionate, and 2,2-difluoroethyl acetate, and more specifically, may include 2,2-difluoroethyl acetate in terms of forming an organic/inorganic composite SEI layer and simultaneously securing the effects of reducing resistance and improving durability of the SEI layer.

The second organic solvent may further include a cyclic carbonate-based solvent together with the ester-based solvent. The cyclic carbonate-based solvent is a high-viscosity organic solvent and has a high dielectric constant, so as to easily dissociate lithium salts in an electrolyte. Specifically, the cyclic carbonate-based solvent may include at least one selected from the group consisting of ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate, and more specifically, may include at least one selected from the group consisting of ethylene carbonate (EC) and fluoroethylene carbonate (FEC), and even more specifically, may include ethylene carbonate (EC).

If the second organic solvent includes the ester-based solvent and the cyclic carbonate-based solvent, the second organic solvent may include the ester-based solvent and the cyclic carbonate-based solvent in a volume ratio of 60:40 to 99:1, specifically, a volume ratio of 70:30 to 98:2, and more specifically, a volume ratio of 75:25 to 95:5. In this case, the second organic solvent is preferable in terms of simultaneously satisfying high dielectric constant and low viscosity characteristics and achieving excellent ion conductivity characteristics, so that the gas generation reduction effect during battery operation using the second organic solvent may be exhibited at an excellent level.

The second organic solvent may not include a linear carbonate-based solvent. Accordingly, it is preferable in that the generation of $CO_2$ may be reduced during charging/discharging or high-temperature storage of the battery.

The second non-aqueous electrolyte may further include a lithium salt (which may be represented as a second lithium salt). Specifically, at least one of the first non-aqueous electrolyte and the second non-aqueous electrolyte may further include a lithium salt. Alternatively, the second non-aqueous electrolyte may not include a lithium salt, and the first non-aqueous electrolyte may include a lithium salt.

As the lithium salt, various lithium salts commonly used in non-aqueous electrolytes for lithium secondary batteries may be used without limitation. For example, the lithium salt includes $Li^+$ as a cation and may include as an anion, at least one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$ and $(CF_3CF_2SO_2)_2N^-$.

Specifically, the lithium salt may include at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, $LiB(C_2O_4)_2$ (LiBOB), $LiCF_3SO_3$, $LiN(SO_2F)_2$ (LiFSI), $LiCH_3SO_3$, $LiCF_3CO_2$, $LiCH_3CO_2$ and $LiN(SO_2CF_2CF_3)_2$ (LiBETI). Specifically, the lithium salt may include at least one selected from the group consisting of $LiBF_4$, $LiClO_4$, $LiPF_6$, $LiB(C_2O_4)_2$ (LiBOB), $LiCF_3SO_3$, $LiN(SO_2CF_3)_2$ (LiTFSI) , $LiN(SO_2F)_2$ (LiFSI) and $LiN(SO_2CF_2CF_3)_2$ (LiBETI).

The second non-aqueous electrolyte may further include an additive (which may be represented as a second additive).

The additive may be included in the first non-aqueous electrolyte for the purpose of preventing the non-aqueous electrolyte from being decomposed in a high-power environment and causing negative electrode collapse, or for the purpose of improving low-temperature high-rate discharge characteristics, high-temperature stability, preventing overcharge, suppressing battery expansion at high temperatures, and reinforcing the SEI layer.

Specifically, the additive may be at least one selected from the group consisting of vinylene carbonate, vinyl ethylene carbonate, fluoroethylene carbonate, propane sultone, propene sultone, 1,4-butane sultone, ethane sultone, succinonitrile, adiponitrile, ethylene sulfate, lithium difluoro phosphate (LiDFP), lithium tetrafluoroborate ($LiBF_4$), lithium difluoro(oxalato)borate (LiODFB), lithium bis-(oxalato)borate (LiBOB), and tris(trimethylsilyl) **phosphite** (TMSPi). Specifically, the additive may include at least one selected from the group consisting of vinylene carbonate, propane sultone, and ethylene sulfate. More specifically, the additive may include vinylene carbonate, propane sultone, and ethylene sulfate.

The additive may be included in the second non-aqueous electrolyte at 0.1 wt% to 15 wt%.

The second non-aqueous electrolyte may be injected into the battery case by partially opening the sealed portion of the activated pre-lithium secondary battery. After the injection of the second non-aqueous electrolyte, the battery case may be sealed.

In the present invention, the volume ratio of the injection amount of the first non-aqueous electrolyte and the injection amount of the second non-aqueous electrolyte may be 50:50 to 95:5, specifically 60:40 to 92:8, more specifically 70:30 to 90:10, more specifically 75:25 to 88:12. Within the range, it is preferable in that gas reduction effect during battery operation may be sufficiently exhibited, an electrode film with excellent durability may be formed during the initial activation process, and the electrode may be sufficiently impregnated with the electrolyte.

The total volume of the injection amounts of the first non-aqueous electrolyte and the second non-aqueous electrolyte may be adjusted in consideration of the size of the electrode assembly, the battery case or the like, as is known in the art. Specifically, the total volume of the injection amounts of the first non-aqueous electrolyte and the second non-aqueous electrolyte may be designed to fill all of the empty space in the battery case in which the electrode assembly is accommodated. More specifically, in this case, the total volume of the first non-aqueous electrolyte and the second non-aqueous electrolyte may be designed to fill not only the empty space excluding the space in which the electrode assembly is accommodated in the battery case, but also the empty space formed by the pores of the electrode and the separator in the electrode assembly. For example, the injection weights of the first non-aqueous electrolyte and the second non-aqueous electrolyte per capacity of the secondary battery may be at the level of 2.0 g/Ah to 2.5 g/Ah, but is not limited thereto.

The operating voltage of the lithium secondary battery manufactured from the manufacturing method of the present invention may be 4.35 V or higher, specifically 4.4 V or higher. The lithium secondary battery manufactured from the manufacturing method of the present invention may achieve improved life performance and high-temperature storage performance even at a high operating voltage due to the above-described features and is preferable.

The external shape of the lithium secondary battery of the present invention is not particularly limited, but may be a cylindrical shape, a prismatic shape, a pouch shape or a coin shape using a can.

Hereinafter, the present invention will be described in more detail through specific examples. However, the examples below are merely examples to help understand the present invention and do not limit the scope of the present invention. It will be apparent to those skilled in the art that various changes and modifications are possible within the scope and technical idea of the present disclosure, and it is natural that such changes and modifications fall within the scope of the appended patent claims.

## Examples and Comparative Examples

## Example 1

(Manufacture of Electrode Assembly and Accommodation in Battery Case)

A positive electrode active material ($Li[Ni_{0.6}Co_{0.1}Mn_{0.3}]O_2$): a conductive material (carbon nanotubes) : a binder (polyvinylidene fluoride) were added to a solvent, N-methyl-2-pyrrolidone (NMP), at a weight ratio of 97.0:1.2:1.8 to prepare a positive electrode slurry. The positive electrode slurry was applied to one side of a positive electrode current collector (Al thin film) having a thickness of 15 $\mu$m, dried and roll pressed to form a positive electrode active material layer (thickness: 137 $\mu$m), which was used as a positive electrode.

A negative electrode active material (artificial graphite): a conductive material (carbon black): a binder (styrene-butadiene rubber and carboxymethyl cellulose) were added to distilled water as a solvent at a weight ratio of 97.4:0.5:2.1 to prepare a negative electrode slurry (solid content 53 wt%). The negative electrode slurry was applied to one side of a negative electrode current collector (Cu thin film) having a thickness of 15 $\mu$m, dried and roll pressed to form a negative electrode active material layer (thickness: 176 $\mu$m), which was used as a negative electrode.

An electrode assembly was prepared by interposing a polyethylene porous film separator between the positive electrode and the negative electrode manufactured above.

The manufactured electrode assembly was accommodated in an aluminum pouch-type battery case.

(Preparation and Injection of First Non-aqueous Electrolyte)

As a first organic solvent, a mixture of ethylene carbonate (EC) and ethyl methyl carbonate (EMC) in a volume ratio of 30:70 was used.

To the first organic solvent, $LiPF_6$ as a lithium salt and vinylene carbonate, propane sultone, and ethylene sulfate as first additives were added to prepare a first non-aqueous electrolyte.

$LiPF_6$ was added to the first non-aqueous electrolyte at a concentration of 1 mol/L. The vinylene carbonate, propane sultone, and ethylene sulfate were each added to the first non-aqueous electrolyte at a content of 0.5 wt%.

The first non-aqueous electrolyte was injected into the aluminum pouch-type battery case accommodating the electrode assembly, and sealed to manufacture a pre-lithium secondary battery.

(Activation)

At room temperature, the pre-lithium secondary battery was activated by charging to SOC 30% in CC mode with 0.1 C.

(Injection of Second Non-aqueous Electrolyte)

As the second organic solvent, a mixture of ethylene carbonate (EC) and 2,2-difluoroethyl acetate in a volume ratio of 30:70 was used.

To the second organic solvent, $LiPF_6$ as a lithium salt and vinylene carbonate, propane sultone, and ethylene sulfate as second additives were added to prepare a second non-aqueous electrolyte.

$LiPF_6$ was added to the second non-aqueous electrolyte at a concentration of 1 mol/L. The vinylene carbonate, propane sultone, and ethylene sulfate were each added to the second non-aqueous electrolyte at a content of 0.5 wt%.

After partially opening the battery case of the activated pre-lithium secondary battery, the second non-aqueous electrolyte was injected, and the battery case was sealed again to manufacture a lithium secondary battery.

In the lithium secondary battery, the volume ratio of the injection amount of the first non-aqueous electrolyte and the injection amount of the second non-aqueous electrolyte was 85:15. The total volume of the injection amounts of the first non-aqueous electrolyte and the second non-aqueous electrolyte was designed so as to be injected into an empty space within the battery case.

**Example 2**

A lithium secondary battery was manufactured in the same manner as Example 1, except that the volume ratio of the injection amount of the first non-aqueous electrolyte and the injection amount of the second non-aqueous electrolyte was adjusted to 95:5, though the total volume of the injection amount of the first non-aqueous electrolyte and the injection amount of the second non-aqueous electrolyte was the same as in Example 1.

**Example 3**

A lithium secondary battery was manufactured in the same manner as Example 1, except that the volume ratio of the injection amount of the first non-aqueous electrolyte and the injection amount of the second non-aqueous electrolyte was adjusted to 75:25, though the total volume of the injection amount of the first non-aqueous electrolyte and the injection amount of the second non-aqueous electrolyte was the same as in Example 1.

**Example 4**

A lithium secondary battery was manufactured in the same manner as Example 1, except for using a mixture of ethylene carbonate (EC) and propyl propionate (PP) in a volume ratio of 30:70 as the second organic solvent.

**Comparative Example 1**

(Manufacture of Electrode Assembly and Accommodation in Battery Case)

An electrode assembly was accommodated in a battery case in the same manner as in Example 1.

(Preparation and Injection of Non-aqueous Electrolyte)

The same non-aqueous electrolyte as the first non-aqueous electrolyte in Example 1 was prepared.
The non-aqueous electrolyte prepared was injected into an aluminum pouch-type battery case containing the electrode assembly, and sealed to manufacture a pre-lithium secondary battery. In this case, the injection amount of the non-aqueous electrolyte was set to the same volume as the total volume of the injection amounts of the first non-aqueous electrolyte and the second non-aqueous electrolyte in Example 1.

(Activation)

A lithium secondary battery of Comparative Example 1 was manufactured by performing an activation process in the same manner as in Example 1. Unlike Example 1, the lithium secondary battery of Comparative Example 1 did not undergo a separate non-aqueous electrolyte injection process after the activation process.

**Comparative Example 2**

(Manufacturing of Electrode Assembly and Accommodation in Battery Case)

An electrode assembly was accommodated in a battery case in the same manner as in Example 1.

(Preparation and Injection of Non-aqueous Electrolyte)

The same non-aqueous electrolyte as the second non-aqueous electrolyte in Example 1 was prepared.
The non-aqueous electrolyte prepared was injected into an aluminum pouch-type battery case containing the electrode assembly, and sealed to manufacture a pre-lithium secondary battery. In this case, the injection amount of the non-aqueous electrolyte was set to the same volume as the total volume of the injection amounts of the first non-aqueous electrolyte and the second non-aqueous electrolyte in Example 1.

(Activation)

The activation process was performed in the same manner as in Example 1 to manufacture a lithium secondary battery of Comparative Example 2. Unlike Example 1, the lithium secondary battery of Comparative Example 2 did not undergo a separate non-aqueous electrolyte injection process after the activation process.

**Comparative Example 3**

(Manufacturing of Electrode Assembly and Accommodation in Battery Case)

An electrode assembly was accommodated in a battery case in the same manner as in Example 1.

(Preparation and Injection of First Non-aqueous Electrolyte)

The same non-aqueous electrolyte as the second non-aqueous electrolyte in Example 1 was prepared and was used as the first non-aqueous electrolyte of Comparative Example 3.
The non-aqueous electrolyte prepared was injected into an aluminum pouch-type battery case containing the electrode assembly, and sealed to manufacture a pre-lithium secondary battery.

(Activation)

The activation process of the pre-lithium secondary battery was performed in the same manner as in Example 1.

(Injection of Second Non-aqueous Electrolyte)

The same non-aqueous electrolyte as the first non-aqueous electrolyte of Example 1 was prepared and was used as the second non-aqueous electrolyte of Comparative Example 3.
After partially opening the battery case of the activated pre-lithium secondary battery, the second non-aqueous electrolyte was injected, and the battery case was sealed again to manufacture a lithium secondary battery.
In the lithium secondary battery, the volume ratio of the injected amount of the first non-aqueous electrolyte and the injected amount of the second non-aqueous electrolyte was 85:15.

**Experimental Examples**

**Experimental Example 1: Evaluation of High-temperature**

**Cycle Performance**

The lithium secondary batteries manufactured in Examples 1 to 4 and Comparative Examples 1 to 3 were charged to 4.4 V, 0.05 C at 45°C using an electrochemical charger/discharger under CC/CV, 0.33 C conditions, and then discharged to 2.5 V under CC, 0.33 C conditions, which constituted one cycle, and 200 charge/discharge cycles were performed.
A capacity retention ratio was calculated using the Equation below, and the results are shown in Table 1 below.

Capacity retention ratio (%) = {(discharge capacity after 200 cycles/discharge capacity after 1 cycle)} $\times$ 100

Experimental Example 2: Evaluation of High-temperature Storage Performance

The lithium secondary batteries manufactured in Examples 1 to 4 and Comparative Examples 1 to 3 were charged to 4.4 V, 0.05 C under CC/CV, 0.33 C conditions at 25°C and discharged to 2.5 V under CC, 0.33 C conditions to perform initial charge/discharge, and then charged to 4.4 V, 0.05 C under CC/CV, 0.33 C conditions at 25°C and stored at 60°C for 16 weeks.
A volume increase ratio was calculated by the Equation below, and the results are shown in Table 1 below.

Volume increase ratio (%) = (volume of lithium secondary battery after 16 weeks of storage - initial volume)/(initial volume) $\times$ 100.

[Table 1]

| | Experimental Example 1 | Experimental Example 2 |
|---|---|---|
| | Capacity retention ratio (%) | Volume increase ratio (%) |
| Example 1 | 93.4 | 3.7 |

(continued)

|  | Experimental Example 1 | Experimental Example 2 |
|---|---|---|
|  | Capacity retention ratio (%) | Volume increase ratio (%) |
| Example 2 | 93.8 | 4.5 |
| Example 3 | 93.1 | 3.5 |
| Example 4 | 92.9 | 2.8 |
| Comparative Example 1 | 92.3 | 6.8 |
| Comparative Example 2 | 89.6 | 4.9 |
| Comparative Example 3 | 90.7 | 5.1 |

Referring to Table 1 above, it can be confirmed that the lithium secondary batteries of Examples 1 to 4 manufactured by injecting the first non-aqueous electrolyte including a linear carbonate-based solvent as the first organic solvent and the second non-aqueous electrolyte including an ester-based solvent as the second organic solvent according to the present invention, before and after the activation process, respectively, simultaneously improve the high-temperature life performance and volume reduction effect compared to the Comparative Examples that do not.

**Claims**

1.  A method for manufacturing a lithium secondary battery, the method comprising:

    a step of preparing an electrode assembly comprising a positive electrode, a negative electrode, and a separator;
    a step of accommodating the electrode assembly in a battery case;
    a step of injecting a first non-aqueous electrolyte into the battery case to manufacture a pre-lithium secondary battery;
    a step of activating the pre-lithium secondary battery; and
    a step of injecting a second non-aqueous electrolyte into the activated pre-lithium secondary battery, wherein the first non-aqueous electrolyte comprises a first organic solvent comprising a linear carbonate-based solvent, and
    the second non-aqueous electrolyte comprises a second organic solvent comprising an ester-based solvent.

2.  The method for manufacturing a lithium secondary battery according to claim 1, wherein the linear carbonate-based solvent comprises at least one selected from the group consisting of dimethyl carbonate, diethyl carbonate and ethyl methyl carbonate.

3.  The method for manufacturing a lithium secondary battery according to claim 1, wherein the first organic solvent further comprises a cyclic carbonate-based solvent.

4.  The method for manufacturing a lithium secondary battery according to claim 3, wherein the cyclic carbonate-based solvent comprises at least one of ethylene carbonate and fluoroethylene carbonate.

5.  The method for manufacturing a lithium secondary battery according to claim 3, wherein the first organic solvent comprises the linear carbonate-based solvent and the cyclic carbonate-based solvent in a volume ratio of 60:40 to 95:5.

6.  The method for manufacturing a lithium secondary battery according to claim 1, wherein the first organic solvent does not comprise an ester-based solvent.

7.  The method for manufacturing a lithium secondary battery according to claim 1, wherein the ester-based solvent comprises at least one selected from the group consisting of ethyl propionate, propyl propionate and 2,2-difluoroethyl acetate.

8.  The method for manufacturing a lithium secondary battery according to claim 1, wherein the second organic solvent further comprises at least one cyclic carbonate-based solvent selected from ethylene carbonate and fluoroethylene carbonate.

9. The method for manufacturing a lithium secondary battery according to claim 8, wherein the second organic solvent comprises the ester-based solvent and the cyclic carbonate-based solvent in a volume ratio of 60:40 to 95:5.

10. The method for manufacturing a lithium secondary battery according to claim 1, wherein the volume ratio of the injection amount of the first non-aqueous electrolyte and the injection amount of the second non-aqueous electrolyte is 50:50 to 99:1.

11. The method for manufacturing a lithium secondary battery according to claim 1, wherein at least one of the first non-aqueous electrolyte and the second non-aqueous electrolyte further comprises a lithium salt.

12. The method for manufacturing a lithium secondary battery according to claim 1, wherein the step of activating the pre-lithium secondary battery comprises an electrochemical charging process of the pre-lithium secondary battery.

## INTERNATIONAL SEARCH REPORT

| International application No. |
|---|
| **PCT/KR2024/020708** |

| A. | CLASSIFICATION OF SUBJECT MATTER |
|---|---|
| | **H01M 10/0569**(2010.01)i; **H01M 10/052**(2010.01)i |

According to International Patent Classification (IPC) or to both national classification and IPC

| B. | FIELDS SEARCHED |
|---|---|

Minimum documentation searched (classification system followed by classification symbols)

H01M 10/0569(2010.01); H01M 10/04(2006.01); H01M 10/052(2010.01); H01M 10/058(2010.01); H01M 4/139(2010.01); H01M 4/1393(2010.01); H01M 4/58(2010.01); H01M 50/609(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 전리튬화(prelithiation), 비수전해질 (non-aqueous electrolyte), 활성화(activation), 유기용매(organic solvent), 선형 카보네이트(linear carbonate), 에스터(ester)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2020-0030482 A (LG CHEM, LTD.) 20 March 2020 (2020-03-20)<br>See claims 1, 2, 4 and 7; and paragraphs [0059]-[0062] and [0103]. | 1-12 |
| Y | KR 10-2023-0162563 A (LG ENERGY SOLUTION, LTD.) 28 November 2023 (2023-11-28)<br>See claim 1; and paragraphs [0095] and [0098]-[0100]. | 1-12 |
| A | CN 113629365 A (SVOLT ENERGY TECHNOLOGY COMPANY LIMITED) 09 November 2021 (2021-11-09)<br>See abstract; claims 1 and 6-10; and paragraphs [0043] and [0045]. | 1-12 |
| A | CN 109742325 A (SPRINGPOWER TECHNOLOGY (SHENZHEN) CO., LTD. et al.) 10 May 2019 (2019-05-10)<br>See abstract; and claims 1-10. | 1-12 |
| A | KR 10-2017-0020850 A (AMPRIUS, INC.) 24 February 2017 (2017-02-24)<br>See abstract; and claims 1-21. | 1-12 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **28 March 2025** | **28 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 769 627 A1**

| INTERNATIONAL SEARCH REPORT | | | | International application No. | |
|---|---|---|---|---|---|
| Information on patent family members | | | | **PCT/KR2024/020708** | |

| Patent document cited in search report | | | Publication date (day/month/year) | Patent family member(s) | | | Publication date (day/month/year) |
|---|---|---|---|---|---|---|---|
| KR | 10-2020-0030482 | A | 20 March 2020 | CN | 112313819 | A | 02 February 2021 |
| | | | | CN | 112313819 | B | 04 July 2023 |
| | | | | EP | 3793005 | A1 | 17 March 2021 |
| | | | | EP | 3793005 | A4 | 13 October 2021 |
| | | | | EP | 3793005 | B1 | 18 January 2023 |
| | | | | KR | 10-2379223 | B1 | 28 March 2022 |
| | | | | US | 11799085 | B2 | 24 October 2023 |
| | | | | US | 2021-0159500 | A1 | 27 May 2021 |
| | | | | WO | 2020-055183 | A1 | 19 March 2020 |
| KR | 10-2023-0162563 | A | 28 November 2023 | | None | | |
| CN | 113629365 | A | 09 November 2021 | CN | 113629365 | B | 23 May 2023 |
| CN | 109742325 | A | 10 May 2019 | CN | 109742325 | B | 19 January 2021 |
| KR | 10-2017-0020850 | A | 24 February 2017 | CN | 106797051 | A | 31 May 2017 |
| | | | | EP | 3155687 | A1 | 19 April 2017 |
| | | | | EP | 3155687 | A4 | 06 December 2017 |
| | | | | JP | 2017-526106 | A | 07 September 2017 |
| | | | | US | 2015-0364795 | A1 | 17 December 2015 |
| | | | | WO | 2015-192051 | A1 | 17 December 2015 |

Form PCT/ISA/210 (patent family annex) (July 2022)